# EUROPEAN PATENT APPLICATION

(11) **EP 4 852 293 A1**
(43) Date of publication of application: **09.12.2026**
(21) Application number: 26182176.3
(22) Date of filing: 01.06.2026
(51) Int. Cl.: H02M 7/06, H02H 9/00, H02M 1/36

(54) **CONTROL DEVICE**

(30) Priority: 06.06.2025 JP 2025094838
(71) Applicant: OMRON Corporation, Kyoto-shi, Kyoto 600-8530 (JP)
(72) Inventor: MATSUDA, Tatsuki, Kyoto, 600-8530 (JP); ASANO, Megumu, Kyoto, 600-8530 (JP); MOCHIZUKI, Yuichi, Kyoto, 600-8530 (JP); HIRATA, Taketomo, Kyoto, 600-8530 (JP); MURAKAMI, Takuji, Kyoto, 600-8530 (JP); OKUDA, Shunya, Kyoto, 600-8530 (JP)
(74) Representative: Isarpatent

(57) **Abstract**

A control device (20) for a DC-bus power-supply system comprises a prevention circuit including a resistor (22) connected to a positive- or negative-electrode side of the DC bus (11/21/151) and a relay (23) disposed in parallel with the resistor, a detection unit (27) configured to detect the PN voltage between the positive- and negative-electrode sides of the DC bus from the start timing at which the DC power-supply device (10) begins output while the relay (23) is in the off state, a calculation unit (210) configured to calculate a PN-voltage increase rate, i.e., the time derivative of the PN voltage, based on the PN voltage detected by the detection unit, and a relay--control unit (210) configured to switch the relay (23) from an off state to an on state when the PN-voltage increase rate falls below a predetermined threshold value after the start timing.

Fig. 2

## Description

### TECHNICAL FIELD

The present invention relates to a control device that controls a current of a DC bus to which DC power is output from a DC power supply device.

### BACKGROUND ART

As a power supply system for driving an electric motor such as a motor, a system having a DC bus is widely used. In order to implement stable supply of power by connecting various devices using DC power to the DC bus, a capacitor may be provided for the DC bus. The DC power supplied to such a DC bus may be generated by a converter that converts input AC power into DC power. Subsequently, immediately after the supply of the DC power is started by the converter, since a DC voltage is suddenly applied to the DC bus, a steep pulse-like inrush current may flow through the DC bus. The inrush current is not preferable because it causes a local temperature rise or the like. In this regard, in the related art, a prevention circuit for suppressing the peak value of the inrush current may be provided in the DC bus.

For example, Patent Document 1 discloses a configuration in which it is monitored whether a voltage between terminals of a capacitor provided between a positive electrode side and a negative electrode side of a DC bus reaches a reference voltage and on/off control of a relay included in a circuit for preventing an inrush current is performed based on the monitoring result. Patent Document 2 discloses a configuration in which on/off control of a relay included in a circuit for preventing an inrush current is performed based on an elapsed time from when output of DC power from a converter to a DC bus is started.

### CITATION LIST

### PATENT LITERATURE

PATENT DOCUMENT 1: JP 2011-182568 A
Patent Document 2: JP 2019-126236 A

### SUMMARY OF INVENTION

### TECHNICAL PROBLEM

IN GENERAL, A PREVENTION CIRCUIT IN WHICH A RESISTOR AND A RELAY ARE COMBINED IS OFTEN USED TO SUPPRESS THE PEAK OF THE INRUSH CURRENT IN THE DC BUS. IN THE PREVENTION CIRCUIT, THE RELAY IS TURNED OFF DURING A PERIOD IN WHICH THE INRUSH CURRENT IS GENERATED, AND THE RESISTOR IN THE PREVENTION CIRCUIT IS CONNECTED TO THE DC BUS, THEREBY SUPPRESSING THE PEAK OF THE INRUSH CURRENT. ON THE OTHER HAND, WHEN THE RESISTOR IS KEPT CONNECTED TO THE DC BUS, SINCE THE POWER OF THE DC BUS IS WASTEFULLY CONSUMED, THE RELAY IS SWITCHED FROM THE OFF STATE TO AN ON STATE AT THE TIMING WHEN THE INRUSH CURRENT DECREASES TO SOME EXTENT, AND THE RESISTOR IS SUBSTANTIALLY DISCONNECTED FROM THE DC BUS.

As described above, the peak value of the inrush current can be suppressed to some extent by using the prevention circuit. However, at the timing of switching the relay from the off state to the on state, the flow of the current in the DC bus is suddenly switched, and a secondary inrush current may occur. In particular, the DC power output from the converter is not always stable, and may vary within a predetermined allowable range. Therefore, the related art is not always able to sufficiently suppress the secondary inrush current.

The present invention has been made in view of such a problem, and an object thereof is to provide a technique for suitably suppressing a secondary inrush current in a DC bus to which DC power is output from a DC power supply device such as a converter.

### SOLUTION TO PROBLEM

A control device according to an aspect of the disclosure of the present application includes: a prevention circuit configured to suppress an inrush current when output of DC power from a DC power supply device such as a converter to a DC bus is started and including a resistor connected to a positive electrode side or a negative electrode side of the DC bus and a relay disposed in parallel with the resistor; a detection unit configured to detect a PN voltage between the positive electrode side and the negative electrode side of the DC bus from a start timing at which the output of the DC power from the DC power supply device is started in a state in which the relay is turned off; a calculation unit configured to calculate a PN voltage increase rate that is a time derivative of the PN voltage based on the PN voltage detected by the detection unit; and a relay control unit configured to switch the relay from an off state to an on state when the PN voltage increase rate falls below a predetermined threshold value from the start timing.

The control device of the disclosure of the present application is a control device that controls the relay provided in the prevention circuit in order to suppress the inrush current in the DC bus to which the DC power is output from the DC power supply device. In general, in a DC bus, an inrush current may flow immediately after the supply of DC power from a DC power supply device is started. The inrush current is a pulse-like current and has a relatively large peak value, and therefore may have an undesirable influence on electric devices connected to the DC bus. In this regard, the control device of the disclosure of the present application includes a prevention circuit including a resistor and a relay. When the output of the DC power from the DC power supply device is started, the relay is turned off and thus the inrush current caused by the start of the output flows into the resistor of the prevention circuit, so that the peak value of the inrush current can be suppressed to be lower. Accordingly, the prevention circuit is provided in the vicinity of a portion where an output unit of the DC power supply device is connected to the DC bus (on the upstream side of a capacitor when the capacitor is provided between the positive electrode side and the negative electrode side of the DC bus), thereby reducing the influence of the inrush current as much as possible on the downstream side of the DC bus (on the far side from the DC power supply device).

The inrush current is reduced by the resistor of the prevention circuit, but in order to avoid the subsequent consumption of energy by the resistor, the prevention circuit needs to switch the relay from the off state to an on state. This allows a current flowing through the DC bus to avoid the resistor, thereby suppressing energy loss in the DC bus. Due to the switching of the relay in the prevention circuit from the off state to the on state (hereinafter, also simply referred to as "relay switching"), a secondary inrush current may occur due to a change in an electrical configuration of the DC bus. Since the secondary inrush current also has a relatively high peak value, it has an influence on the contact life of the relay and peripheral devices and thus the peak value thereof is preferably suppressed to be lower.

In this regard, the control device of the disclosure of the present application includes the detection unit and the calculation unit, the PN voltage between the positive electrode side and the negative electrode side of the DC bus from the start timing is detected by the detection unit, and the PN voltage increase rate that is the time derivative of the PN voltage is further calculated by the calculation unit. The PN voltage rises with the lapse of time after the output of the DC power from the DC power supply device to the DC bus is started, and reaches a predetermined voltage value according to the output capability of the DC power supply device and the electrical configuration of the DC bus. The PN voltage increase rate represents an increase rate in the transition of the PN voltage. The applicant has found that, by focusing on the PN voltage increase rate, the timing of relay switching for suppressing the secondary inrush current to be low can be determined without being affected by the fluctuation of the output from the DC power supply device.

In this regard, the relay switching is performed by the relay control unit when the PN voltage increase rate falls below the predetermined threshold value from the start timing. Preferably, the relay control unit performs the relay switching when the PN voltage increase rate falls below the predetermined threshold value for the first time from the start timing. Even though the output from the DC power supply device fluctuates, the PN voltage increase rate when the peak value of the secondary inrush current falls within an allowable value or less is generally stable, and the applicant has configured the control device of the disclosure of the present application by adopting the technical feature of the PN voltage increase rate that is significant from the viewpoint of inrush current suppression. Accordingly, the predetermined threshold value may be set based on the peak value of an allowable secondary inrush current.

With such a configuration, the secondary inrush current caused by the relay switching of the prevention circuit can be suitably suppressed. An example of the control device may be a driver unit including an inverter that receives DC power from the DC bus and generates a drive current for driving an electric motor. The driver unit, which is a control device, may include an inverter capable of driving one or more electric motors. The control device, which is a driver unit, may include the DC power supply device and the DC bus. As a further alternative, a capacitor unit for adjusting voltage fluctuations of the DC bus by a capacitor can also be illustrated as the control device. The control device may have a configuration other than these devices.

In the control device, the predetermined threshold value may be set based on a maximum allowable value of the inrush current associated with the number of operations required for the relay and a maximum value in an allowable range of the PN voltage. That is, the relay included in the prevention circuit is an example of a configuration that is easily affected by the secondary inrush current. When the relay is continuously exposed to an excessive inrush current, the operation of the relay becomes defective and the relay switching becomes difficult. In this regard, in order to secure the number of operations required for the relay (the maximum possible number of operations), a predetermined threshold value is provided in consideration of the maximum allowable value of the inrush current associated with the number of operations and the maximum value of the PN voltage associated with the magnitude of the inrush current, and thus the secondary inrush current can be suitably suppressed so that the predetermined number of operations of the relay can be secured for a user.

In the control device, the DC power supply device may be a converter, and the relay control unit may switch the relay so that a time from the start timing to switching of the relay to the on state increases as an input voltage of the converter increases. With such a configuration, the PN voltage at the time of relay switching can be made higher as the input voltage of the converter increases, and as a result, the difference between the maximum value of a PN voltage assumed and the PN voltage at the time of relay switching decreases and thus, the secondary inrush current can be suppressed.

### ADVANTAGEOUS EFFECTS OF INVENTION

A technique can be provided to suitably suppress a secondary inrush current in a DC bus to which DC power is output from a DC power supply device such as a converter.

### BRIEF DESCRIPTION OF DRAWINGS

FIG. 1 is a diagram illustrating a schematic configuration of a power supply system.
FIG. 2 is a diagram schematically illustrating a circuit configuration of a driver unit and a capacitor unit included in the power supply system illustrated in FIG. 1.
FIG. 3 is a flowchart illustrating a flow of a process for suppressing an inrush current in the power supply system illustrated in FIG. 2.
FIG. 4 is a diagram for describing the behavior of an inrush current when the process illustrated in FIG. 3 is performed.
FIG. 5 is a flowchart illustrating a flow of a life judgment process of a relay included in a prevention circuit for suppressing an inrush current in the power supply system illustrated in FIG. 2.
FIG. 6 is a diagram illustrating a correlation between the number of operations required for the relay included in the prevention circuit and a contact current flowing at the time of relay switching.

### DESCRIPTION OF EMBODIMENTS

Hereinafter, embodiments of the disclosure of the present application are described in detail with reference to the drawings. Note that the same or corresponding parts in the drawings are denoted by the same reference sign, and description thereof is not repeated. In the disclosure of the present application, a driver unit and a capacitor unit for supplying drive power for driving a motor are shown as an exemplary embodiment of a control device, but the technical idea related to the control device of the disclosure of the present application can also be applied to devices other than the driver unit and the capacitor unit.

### First Embodiment

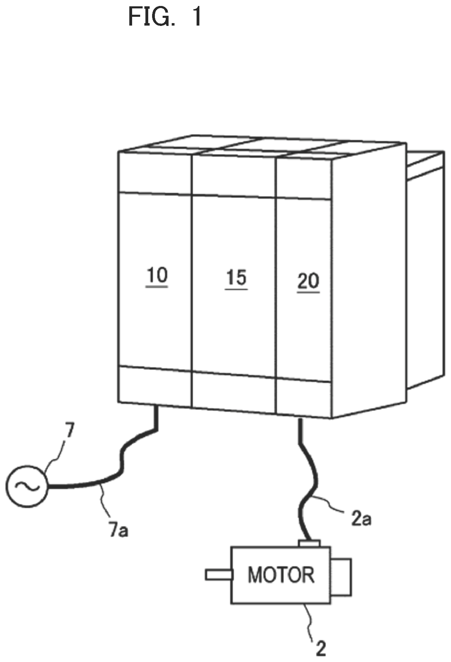

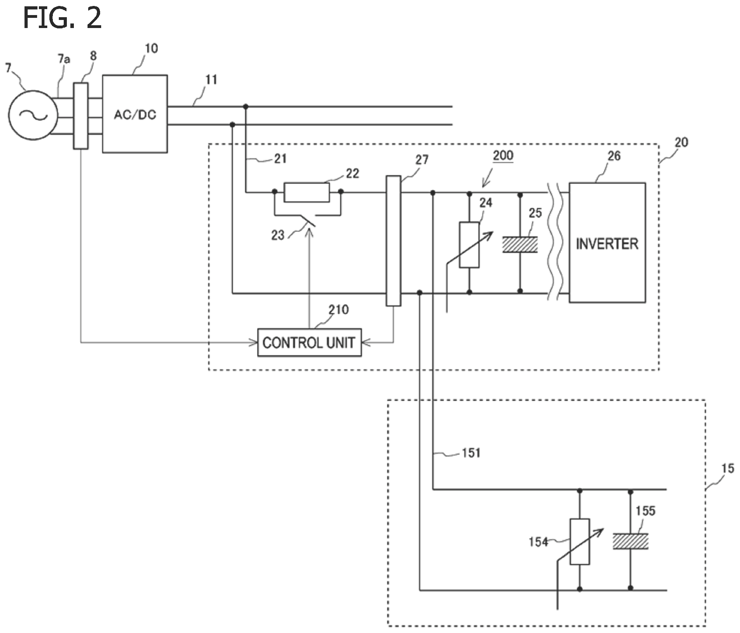

FIG. 1 is a diagram illustrating a schematic configuration of a power supply system that supplies drive power to a motor. The power supply system includes a converter 10, a capacitor unit 15, and a driver unit 20. The converter 10 receives AC power from an AC power supply 7 via a cable 7a and outputs DC power. The output DC power is supplied to the capacitor unit 15 and the driver unit 20, which are disposed adjacent to the converter 10, through a DC bus 11 (see FIG. 2 to be described below). The DC bus 11 is a current path for the DC power and is formed to connect the converter 10, the capacitor unit 15, and the driver unit 20. Each of the capacitor unit 15 and the driver unit 20 corresponds to the control device of the disclosure of the present application.

The driver unit 20 performs servo control of the motor 2 based on a command from a programmable logic controller (PLC) (not illustrated) or the like. A control unit 210 (see FIG. 2 to be described below) of the driver unit 20 is a computer having a CPU that performs arithmetic processing and a memory, and can exert various functions by executing a predetermined control program or the like. For example, the control unit 210 receives, via a network, an operation command signal related to the operation (motion) of the motor 2 from the PLC being a high-level device and a detection signal from an encoder mounted on the motor 2, and calculates a command value for servo control related to driving of the motor 2. Subsequently, the driver unit 20 supplies drive power for driving a corresponding motor to the motor 2 via a power line 2a according to the calculated command value. The control unit 210 is configured to also perform control related to a process for suppressing an inrush current flowing through the DC buses 11 and 21, and details thereof are described below. Moreover, the control unit 210 may be configured to control the motor 2 in addition to the above control.

The capacitor unit 15 is a unit provided therein with a capacitor 155 capable of storing regenerative power from the motor 2. By storing the regenerative power in the capacitor 155, an excessive increase in the voltages of the DC buses 11 and 151 can be suppressed during regeneration of the motor 2, and the stored power can be used to drive the motor 2. In the construction of the power supply system, the capacitor unit 15 is not an essential component, and whether to use the capacitor unit 15, the capacitance of the capacitor 155 included in the capacitor unit 15, and the like may be determined in consideration of operating conditions, load conditions, and the like of the motor 2.

The motor 2 is driven and controlled by the driver unit 20 in order to drive a predetermined equipment device. The driver unit 20 includes an inverter 26 therein, and the inverter 26 generates a drive current for the motor 2. As an example, various mechanical devices (for example, arms of industrial robots or a conveying device) can be exemplified as the equipment device, and the motor 2 is incorporated into the device as an actuator that drives the equipment device. The motor 2 is an AC servo motor. Alternatively, the motor 2 may be an induction motor or a DC motor. The motor 2 has a detection disk rotating in conjunction with the rotation of each rotor, and includes an encoder capable of detecting the rotation state of the rotor. Moreover, the motor 2 may be a linear motor, and in such a case, a linear encoder is used for detecting the position of a movable element.

In the power supply system illustrated in FIG. 1, the configurations of the driver unit 20 and the capacitor unit 15 corresponding to the power supply device are described with reference to FIG. 2. In the power supply system, AC power supplied from the AC power supply 7 is converted into DC power by the converter 10 and output to the DC bus 11. The driver unit 20 is configured to be attachable to and detachable from the DC bus 11. The capacitor unit 15 is configured to be attachable to and detachable from the DC bus 21 in the driver unit 20. Accordingly, a user can detach or attach devices connected to the DC buses 11 and 21 as necessary for the purpose of maintenance or the like.

The following is a description of the configuration of an internal circuit of the driver unit 20, particularly, an input unit 200 to which the DC power supplied from the DC bus 11 is input. The input unit 200 is a portion to which DC power from the outside is input to the driver unit 20, and the DC power input to the input unit 200 is supplied to the inverter 26 located on a downstream side. Since the inverter 26 itself is based on a known technique, detailed description thereof is omitted.

In the input unit 200, a resistor 22 and a relay 23 are provided in a positive-side path of the DC bus 21, the resistor 22 and the relay 23 constituting a prevention circuit for preventing an inrush current from flowing from the DC bus 11 to the input unit 200 when the converter 10 starts supplying DC power to the DC bus 11 to which the driver unit 20 is connected. In the prevention circuit, the resistor 22 and the relay 23 are connected in parallel, and when the relay 23 is turned off, a current flowing through the positive-side path passes through the resistor 22, and when the relay 23 is turned on, a current flows to bypass the resistor 22. More specifically, at the time when the DC power starts to be supplied from the converter 10, the relay 23 is turned off, and a current flows through the resistor 22 in the positive-side path, so that the peak value of the inrush current is suppressed. Subsequently, the relay 23 is turned on after the inrush current is detected, so that power supplied from the DC bus 11 can be prevented from being consumed by the resistor 22. Details of the inrush current suppression process by the prevention circuit are described below. Alternatively, a positive temperature coefficient (PTC) can be used instead of the resistor 22, and a semiconductor switching element can be used instead of the relay 23.

In addition, in the input unit 200, a capacitor 25 is disposed between a positive path and a negative path. The capacitor 25 is disposed to suppress voltage fluctuations of the DC bus 21 within an allowable range, and can also store regenerative power from the motor 2 driven by the driver unit 20. A discharge circuit 24 for discharging the power stored in the capacitor 25 is connected between the positive path and the negative path. The discharge circuit 24 includes a resistor for power consumption and a switch circuit for controlling voltage application to the resistor, and the drive of the switch circuit is appropriately controlled by the control unit 210. Moreover, the input unit 200 includes a detection unit 27 that detects a PN voltage between the positive path and the negative path. The PN voltage detected by the detection unit 27 is delivered to the control unit 210.

The power supply system includes a detection unit 8 that detects an AC voltage (AC voltage at the cable 7a) input to the converter 10. Subsequently, the AC voltage detected by the detection unit 8 is transmitted to the control unit 210 of the driver unit 20.

The capacitor unit 15 is described below. Since the capacitor unit 15 is not a unit for driving the motor, the capacitor unit 15 does not include the inverters 26 as in the driver unit 20, but includes a capacitor 155 and a discharge circuit 154 that are provided between a positive path and a negative path of the DC bus 151.

In this way, the power supply system including the driver unit 20 and the capacitor unit 15 implements the supply of the drive power for the drive control of the motor 2, the recovery of the regenerative power from the motor 2, and the like. Assumed is a timing at which the power supply system starts operating, that is, a timing at which the supply of DC power from the converter 10 to the DC bus 11 is started. At this time, no electric charge is stored in the capacitor 25 of the driver unit 20 and the capacitor 155 of the capacitor unit 15. In this regard, when the output of the DC power from the converter 10 is started, a pulse-like inrush current is generated in the DC bus 21 in the driver unit 20. At this time, the relay 23 of the prevention circuit is turned off, so that the inrush current flows through the resistor 22 to the downstream side of the DC bus 21 where the capacitor 25 is disposed. Similarly, for the capacitor unit 15, the relay 23 of the prevention circuit is turned off, so that the inrush current flows through the resistor 22 to the downstream side of the DC bus 151 where the capacitor 155 is disposed. Hereinafter, for the sake of brevity of description, attention is focused on the inrush current in the driver unit 20.

Since the inrush current has an undesirable influence on electric devices and the like connected to the DC bus 21 when the peak value thereof becomes excessively high, the relay 23 of the prevention circuit is controlled so that the inrush current passes through the resistor 22 in order to suppress the peak value as described above. However, when the state in which the inrush current passes through the resistor 22 is maintained even though the inrush current is low, the influence of power consumption by the resistor 22 is not ignorable, which is not preferable. In this regard, at a timing when the inrush current becomes low to some extent, the relay 23 of the prevention circuit is switched from the off state to an on state (execution of relay switching), so that the current flowing through the DC bus 21 can bypass the resistor 22. However, since switching of the relay 23 to the on state in the prevention circuit causes a path through which a current flows to instantaneously change, a pulse-like current having a relatively high peak value, that is, a secondary inrush current, may occur at the switching timing. The secondary inrush current may also have an undesirable influence on the electric devices and the like connected to the DC bus 21 due to a high peak value thereof. In this regard, the driver unit 20 has a configuration for suppressing the secondary inrush current.

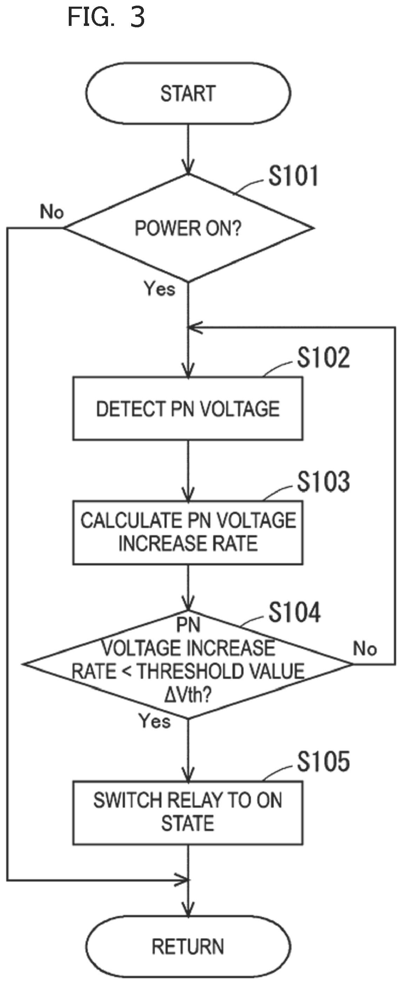

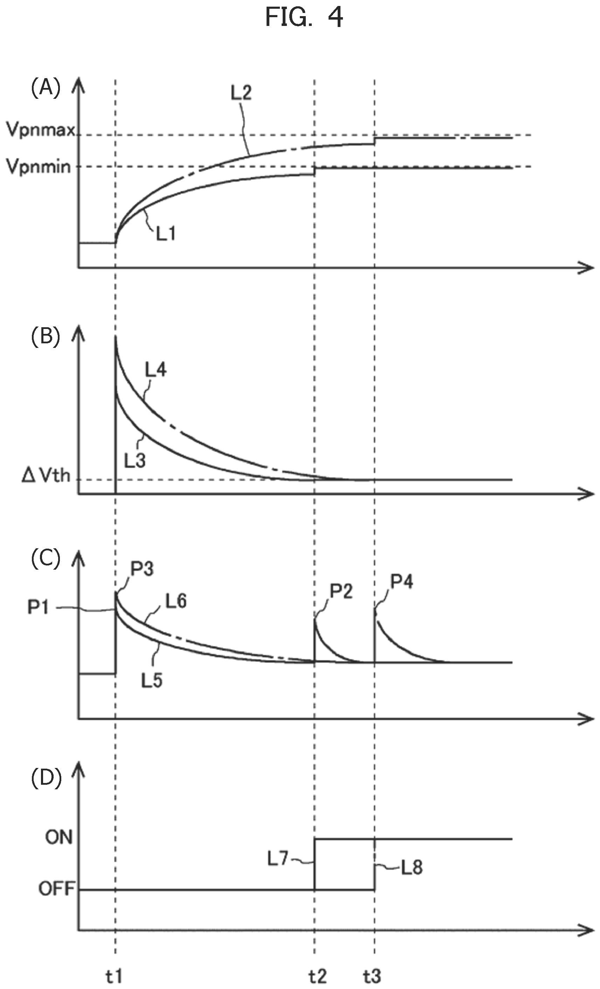

Specifically, the control unit 210 is configured to perform an inrush current suppression process illustrated in FIG. 3. FIG. 3 is a flowchart illustrating a flow of the inrush current suppression process in the DC bus 21 of the driver unit 20. The suppression process is repeatedly performed by the control unit 210 at a timing of a predetermined interval. FIG. 4 is a diagram illustrating a transition of each parameter associated with the inrush current when the suppression process illustrated in FIG. 3 is performed. Regarding the parameters illustrated in FIG. 4, FIG. 4(A) represents the PN voltage (indicated by lines L1 and L2) detected by the detection unit 27, FIG. 4(B) represents the PN voltage increase rate (indicated by lines L3 and L4) being the time derivative of the PN voltage, FIG. 4(C) represents the inrush current (indicated by lines L5 and L6) flowing through the DC bus 21, and FIG. 4(D) represents the transition of the ON state and the OFF state (indicated by lines L7 and L8) of the relay 23 in the prevention circuit. In FIG. 4, the lines L1, L3, L5, and L7 indicate the transition of the parameters in a case where the peak values of the AC voltage applied to the converter 10 are relatively low (a case of the lowest voltage in an allowable voltage range, hereinafter, referred to as a "low-voltage case"). The PN voltage on the DC bus 21 at this time is represented by Vpnmin. In FIG. 4, the lines L2, L4, L6, and L8 indicate the transition of the parameters in a case where the peak values of the AC voltage applied to the converter 10 are relatively high (a case of the highest voltage in the allowable voltage range, hereinafter, referred to as a "high-voltage case"). The PN voltage on the DC bus 21 at this time is represented by Vpnmax. Such a voltage difference is considered to be caused by a voltage fluctuation of the AC power supply 7, or the like.

Moreover, in relation to FIG. 4(C), P1 to P4 indicate the peak of the inrush current. Specifically, P1 is a peak of a primary inrush current in the line L5 (low-voltage case), and P2 is a peak of a secondary inrush current in the line L5. P3 is a peak of a primary inrush current in the line L6 (high-voltage case), and P4 is a peak of a secondary inrush current in the line L6.

The inrush current suppression process illustrated in FIG. 3 is described below. In the power supply system, the relay 23 of the prevention circuit is turned off at the timing when the converter 10 starts operating. First, in S101, it is judged whether the power supply system is powered on. That is, it is judged whether the converter 10 has started operating due to the power activation and the supply of DC power to the DC bus 21 of the driver unit 20 has been started via the DC bus 11. In the power supply system, for example, since the converter 10, the capacitor unit 15, and the driver unit 20 are connected to a higher-level device (such as a PLC) (not illustrated) via control signal lines, the driver unit 20 can ascertain the operating state of the converter 10 via the control signal lines. In S101, when a positive judgment is made, the process proceeds to S102, and when a negative judgment is made, the suppression process of FIG. 3 ends. The timing at which the positive judgment is made in S101 corresponds to a start timing of the disclosure of the present application.

Subsequently, in S102, the PN voltage in the driver unit 20 is detected by the detection unit 27, and in S103, the PN voltage detected in S102 is differentiated to calculate the PN voltage increase rate. Subsequently, in S104, it is judged whether the PN voltage increase rate calculated in S103 is lower than a predetermined threshold value ΔVth (see FIG. 4(B)). The predetermined threshold value ΔVth is set based on the maximum allowable value of the inrush current associated with the number of operations required for the relay 23 and the maximum value Vpnmax in the allowable range of the PN voltage in the DC bus 21. The following is an example of setting ΔVth.

When the number of operations required for the relay 23 is 150000 based on the specifications of the relay 23, the maximum allowable value of the inrush current is set to 12A. When the wiring impedance of the DC bus 21 is Rimp and the resistance component of the capacitor 25 is Resr, a PN voltage Von when the relay 23 is switched to an on state (at the time of relay switching) for securing the number of operations of the relay 23 is calculated by the following Equation 1.
Math 1 ${V}_{on} = {V}_{pnmax} - \left({R}_{imp}+{R}_{esr}\right) \times 12$ (Equation 1)

In Equation 1 above, the start timing is set to t = 0, and the PN voltage Vpn(t) from the start timing is expressed by the following Equation 2.
Math 2 $\begin{matrix}{V}_{pn} \left(t\right) = {V}_{pnmax} \left(1-{e}^{- \frac{t}{CR}}\right) \\ R = {R}_{imp} + {R}_{esr}\end{matrix}$ (Equation 2)

The time tx when the PN voltage Vpn(t) becomes Von is expressed by the following Equation 3 based on Equation 2 above.
Math 3 $tx = - CRlog \left(1-\frac{{V}_{on}}{{V}_{pnmax}}\right)$ (Equation 3)

In Equation 3 above, C is the capacitance of the capacitor 25.

Subsequently, by substituting tx into an Equation obtained by differentiating Equation 2 above, the predetermined threshold value ΔVth is expressed by the following Equation 4.
Math 4 $Δ {V}_{th} = \frac{1}{CR} \left({V}_{pnmax}-{V}_{on}\right)$ (Equation 4)

As described above, the predetermined threshold value ΔVth is a value set to secure a predetermined number of operations in the relay 23 in consideration of the inrush current. At this time, when the AC voltage applied to the converter 10 is within an allowable range, the inrush current at the time of relay switching can be suitably suppressed while securing the predetermined number of operations even though the AC voltage fluctuates. In this regard, when the positive judgment is made in S104, that is, when the PN voltage increase rate is lower than the predetermined threshold value ΔVth and the inrush current at the time of relay switching can be suppressed to be lower than a predetermined value (for example, 12A in the above example), the process proceeds to S105, and the relay 23 is switched from the off state to an on state in S105. On the other hand, when a negative judgment is made in S104, that is, when the PN voltage increase rate is equal to or higher than the predetermined threshold value ΔVth, it is judged that the timing is not yet suitable for the relay switching and the processing after S102 is repeated again.

The transition of the PN voltage, the PN voltage increase rate, the inrush current, and the on/off state of the relay 23 when the inrush current suppression process illustrated in FIG. 3 is performed is described below with reference to FIG. 4. The time t1 in FIG. 4 is a start timing, and corresponds to a timing at which the positive judgment is made in the processing S101. At the time t1, the relay 23 is turned off as illustrated in FIG. 4(D). After the time t1, the DC power is supplied to the DC bus 21, and the PN voltage rises as illustrated in FIG. 4(A). The rise in the PN voltage is in accordance with Equation 2 above.

When the output of the DC power from the converter 10 is started, a temporary inrush current is generated at time t1, and the peak of the inrush current occurs at P1 (low-voltage case) and P3 (high-voltage case). Subsequently, the PN voltage rises with the lapse of time, and the increase rate of the PN voltage decreases. Such transitions of the PN voltage and the PN voltage increase rate are ascertained in the processing S102 and the processing S103. The time when the PN voltage increase rate falls below the predetermined threshold value ΔVth, that is, the timing when the positive judgment is made in the processing S104 is represented by a time t2 in the case of the low-voltage case, and is represented by a time t3 in the case of the high-voltage case. In the high-voltage case, since the value of the PN voltage increase rate at the time t1 is higher than that in the low-voltage case, the time t3 is later than the time t2.

At the times t2 and t3, the relay 23 is switched from the off state to an on state (relay switching is performed). At this time, as illustrated in FIG. 4(C), a secondary inrush current is generated, and the peak of the low-voltage case is represented by P2, and the peak of the high-voltage case is represented by P4. In this way, when the low-voltage case and the high-voltage case are compared, although the timing at which the relay switching is performed is different, since the relay is switched from the off state to the on state in a situation where the PN voltage increase rate is approximately the same, the peak value of the secondary inrush current can be suppressed to substantially the same degree, and as described above, the peak value can be a current value that can secure a predetermined number of operations of the relay 23 (for example, 150000 times in the above example).

### First Modified Example

In the above embodiment, the suppression process in the driver unit 20 has been described; however, the suppression process can also be applied to the capacitor unit 15. In such a case, a detection unit that detects the PN voltage of the DC bus 151 in the capacitor unit 15 may be provided, the PN voltage may be delivered to the control unit of the capacitor unit 15, and the above suppression process may be performed based on the PN voltage increase rate that is the time derivative of the PN voltage.

### Second Modified Example

Moreover, the driver unit 20 in the above-described embodiment may be configured as a unit including the converter 10 and the DC bus 11. That is, in this case, AC power is input to the driver unit 20 and is converted into DC power by the converter 10 inside the driver unit 20, and the DC power is output to the DC bus 11. Subsequently, the DC power on the DC bus 11 is supplied to the inverter 26.

### Second Embodiment

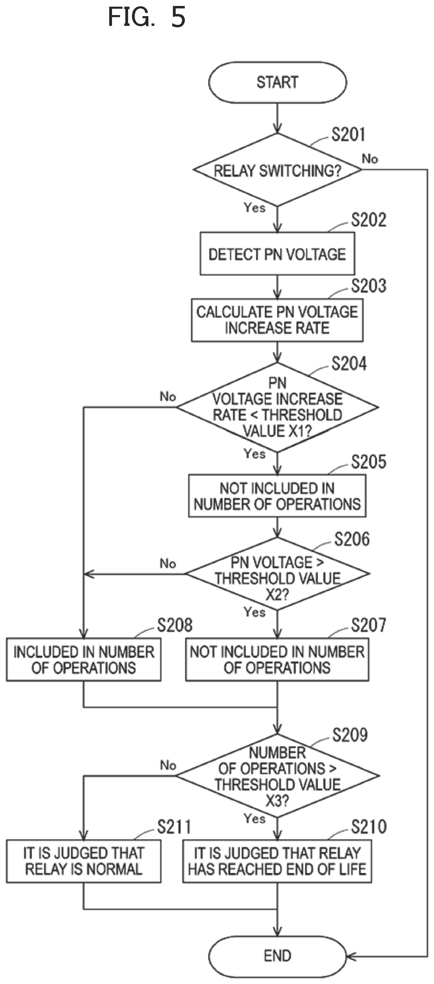

A second embodiment of the disclosure of the present application is described with reference to FIG. 5. Also in the present embodiment, for the sake of brevity of description, attention is focused on the prevention circuit of the driver unit 20. FIG. 5 is a flowchart illustrating a flow of a process for judging the life of the relay 23 of the driver unit 20 (hereinafter, referred to as a "life judgment process"). The life judgment process is repeatedly performed by the control unit 210 at predetermined intervals in a state in which the power supply system is powered on. Since the relay 23 is affected by a current flowing through the relay 23 when relay switching is performed, the number of operations of the relay 23 is limited, in other words, the life of the relay 23 is limited. In this regard, in the life judgment process according to the second embodiment, the life of the relay 23 is judged based on the number of times of relay switching (the number of operations).

First, in S201, it is judged whether relay switching being a switching operation of the relay 23 has been performed. This relay switching corresponds to the processing of S105 in the suppression process described in the first embodiment. In S201, when a positive judgment is made, the process proceeds to S202, and when a negative judgment is made, the life judgment process ends. The relay switching in the case of the positive judgment is referred to as "target relay switching". Subsequently, in S202, a PN voltage in the driver unit 20 is detected by the detection unit 27, and in S203, the PN voltage detected in S202 is differentiated to calculate a PN voltage increase rate. Subsequently, in S204, it is judged whether the PN voltage increase rate calculated in S203 is lower than a first threshold value X1. The first threshold value X1 is set based on an allowable value of an inrush current that is assumed not to affect the number of operations required for the relay 23 and the capacitance of the capacitor 25 provided in the DC bus 21. The following is an example of setting the first threshold value X1.

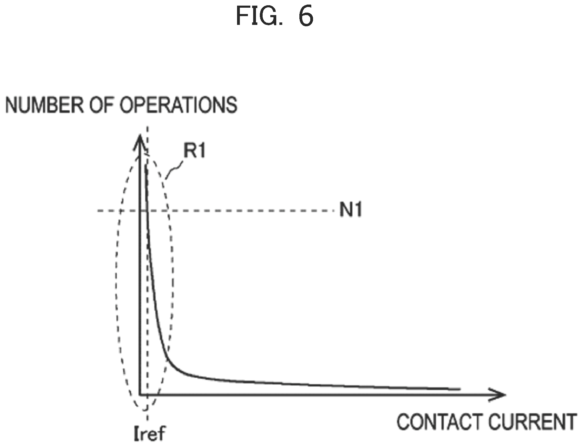

FIG. 6 illustrates a correlation between the number of operations required for the relay 23 included in the prevention circuit and a contact current flowing at the time of relay switching. The contact current is a current flowing through the relay 23 when the relay 23 is turned on, and the contact current immediately after the relay 23 is turned on is an inrush current. In the correlation between the number of operations and the contact current, the value of the number of operations of the relay 23 is extremely large in a region R1 where the contact current is extremely low. It can be said that a contact current Iref corresponding to N1 in which the number of operations of the relay 23 is extremely large does not practically affect the number of operations of the relay 23, that is, does not substantially affect the life of the relay 23. This means that the switching operation of the relay 23 does not substantially affect the life of the relay 23 when the contact current is smaller than Iref. In this regard, focusing on the capacitor 25, the following Equation 5 is established.
Math 5 ${I}_{ref} = \frac{dq}{dt} = C \frac{dv}{dt}$ (Equation 5)

In Equation 5 above, C is the capacitance of the capacitor 25.

Based on Equation 5 above, the first threshold value X1 is expressed by the following Equation 6.
Math 6 $X 1 = \frac{{I}_{ref}}{C}$ (Equation 6)

As described above, the first threshold value X1 is a value that is associated with the PN voltage increase rate and enables the relay 23 to perform the relay switching without substantially affecting the life of the relay 23. In this regard, when a positive judgment is made in S204, that is, when the PN voltage increase rate is lower than the first threshold value X1, the process proceeds to S205, and in S205, the target relay switching judged in S201 is not included in the number of operations for judging the life of the relay 23. On the other hand, when a negative judgment is made in S204, that is, when the PN voltage increase rate is equal to or higher than the first threshold value X1, the process proceeds to S208, and in S208, the target relay switching is included in the number of operations for judging the life of the relay 23.

When the processing of S205 ends, the process proceeds to S206. Subsequently, in S206, it is judged whether the PN voltage detected in S202 is higher than a second threshold value X2. The second threshold value X2 is set based on an allowable value of the inrush current that is assumed not to substantially affect the number of operations required for the relay 23. The following is an example of setting the second threshold value X2.

As described above, the contact current that does not substantially affect the number of operations required for the relay 23 is denoted by Iref as illustrated in FIG. 6. When the wiring impedance of the DC bus 21 is Rimp and the resistance component of the capacitor 25 is Resr, a PN voltage at the time of relay switching in a state in which the life of the relay 23 is not affected can be considered as the second threshold value X2, and thus the second threshold value X2 is calculated by the following Equation 7.
Math 7 $X 2 = {V}_{pnmax} - \left({R}_{imp}+{R}_{esr}\right) \times {I}_{ref}$ (Equation 7)

As described above, the second threshold value X2 is a value that is associated with the PN voltage and enables the relay 23 to perform the relay switching without substantially affecting the life of the relay 23. In this regard, when a positive judgment is made in S206, that is, when the PN voltage is higher than the second threshold value X2, the process proceeds to S207, and in S207, the target relay switching judged in S201 is not included in the number of operations for judging the life of the relay 23. On the other hand, when a negative judgment is made in S206, that is, when the PN voltage is equal to or less than the second threshold value X2, the process proceeds to S208, and in S208, the target relay switching is included in the number of operations for judging the life of the relay 23.

When the processing S207 or the processing S208 ends, the process proceeds to a processing S209. In S209, the life of the relay 23 is judged based on the number of operations of the relay 23 that has been cumulatively counted so far. Specifically, it is judged whether the number of operations so far exceeds a third threshold value X3. The third threshold value X3 is the number of times of relay switching operations, which is guaranteed to a user in consideration of deterioration or the like due to use of the relay 23. Accordingly, when the number of operations of the relay 23 exceeds the third threshold value X3, the relay 23 reaches the end of its life, and the operation thereof is not guaranteed. In this regard, when a positive judgment is made in S209, the process proceeds to S210, and it is judged in S210 that the relay 23 has reached the end of its life. On the other hand, when a negative judgment is made in S209, the process proceeds to S211, and it is judged in S211 that the relay 23 has not reached the end of its life and is normal.

### Third Modified Example

In the above embodiment, the life judgment process in the driver unit 20 has been described; however, the life judgment process can also be applied to the capacitor unit 15. In this case, a detection unit that detects the PN voltage of the DC bus 151 in the capacitor unit 15 may be provided, the PN voltage may be delivered to the control unit of the capacitor unit 15, and the above life judgment process may be performed based on the PN voltage and the PN voltage increase rate that is the time derivative of the PN voltage.

### Fourth Modified Example

Moreover, the driver unit 20 in the above embodiment may be configured as a unit including the converter 10 and the DC bus 11. That is, in this case, AC power is input to the driver unit 20 and is converted into DC power by the converter 10 inside the driver unit 20, and the DC power is output to the DC bus 11. Subsequently, the DC power on the DC bus 11 is supplied to the inverter 26.

### Supplementary Note 1

A control device including a prevention circuit configured to suppress an inrush current when output of DC power from a DC power supply device (10) to a DC bus (11, 21, 151) is started and including a resistor (22) connected to a positive electrode side or a negative electrode side of the DC bus (11, 21, 151) and a relay (23) disposed in parallel with the resistor (22),
a detection unit (27) configured to detect a PN voltage between the positive electrode side and the negative electrode side of the DC bus (11, 21, 151) from a start timing at which the output of the DC power from the DC power supply device (10) is started in a state in which the relay (23) is turned off,
a calculation unit (210) configured to calculate a PN voltage increase rate that is a time derivative of the PN voltage based on the PN voltage detected by the detection unit (27), and
a relay control unit (210) configured to switch the relay (23) from an off state to an on state when the PN voltage increase rate falls below a predetermined threshold value from the start timing.

### Supplementary Note 2

The control device according to Supplementary Note 1, wherein the predetermined threshold value is set based on a maximum allowable value of the inrush current associated with the number of operations required for the relay and a maximum value in an allowable range of the PN voltage.

### Supplementary Note 3

The control device according to Supplementary Note 2, wherein the DC power supply device is a converter, and
the relay control unit (210) switches the relay (23) so that a time from the start timing to switching of the relay (23) to the on state increases as an input voltage of the converter (10) increases.

### Supplementary Note 4

The control device according to any one of Supplementary Notes 1 to 3, wherein the control device is a driver unit (20) including an inverter (26) that receives the DC power from the DC bus (11, 21, 151) and to generate a drive current for driving an electric motor.

### Supplementary Note 5

The control device according to Supplementary Note 4, wherein the control device includes the DC power supply device (10) and the DC bus (11, 21, 151).

## Claims

1. A control device comprising:
a prevention circuit configured to suppress an inrush current when output of DC power from a DC power supply device (10) to a DC bus (11, 21, 151) is started, the prevention circuit including a resistor (22) connected to a positive electrode side or a negative electrode side of the DC bus (11, 21, 151) and a relay (23) disposed in parallel with the resistor (22);
a detection unit (27) configured to detect a PN voltage between the positive electrode side and the negative electrode side of the DC bus (11, 21, 151) from a start timing at which the output of the DC power from the DC power supply device (10) is started in a state in which the relay (23) is turned off;
a calculation unit (210) configured to calculate a PN voltage increase rate that is a time derivative of the PN voltage based on the PN voltage detected by the detection unit (27); and
a relay control unit (210) configured to switch the relay (23) from an off state to an on state when the PN voltage increase rate falls below a predetermined threshold value from the start timing.

2. The control device according to claim 1, wherein the predetermined threshold value is set based on a maximum allowable value of the inrush current associated with the number of operations required for the relay and a maximum value in an allowable range of the PN voltage.

3. The control device according to claim 2, wherein the relay control unit (210) switches the relay (23) so that a time from the start timing to switching of the relay (23) to the on state increases as an input voltage of the DC power supply device (10) increases.

4. The control device according to any one of claims 1 to 3, wherein the control device is a driver unit (20) including an inverter (26) that receives the DC power from the DC bus (11, 21, 151) to generate a drive current for driving an electric motor.

5. The control device according to claim 4, wherein the control device includes the DC power supply device (10) and the DC bus (11, 21, 151).
